# EUROPEAN PATENT SPECIFICATION

(11) **EP 1 405 375 B1**
(45) Date of publication and mention of the grant of the patent: **22.11.2006**
(21) Application number: 01949105.9
(22) Date of filing: 10.07.2001
(51) Int. Cl.: H01R 13/514

(54) **CORDLESS BASE**
SCHNURLOSE BASIS
BASE SANS FIL

(30) Priority: 01.06.2001 AU PR538401
(43) Date of publication of application: 07.04.2004
(73) Proprietor: Khoury, Edward Joseph, Bateman, W.A. 6150 (AU)
(72) Inventor: Khoury, Edward Joseph, Bateman, W.A. 6150 (AU)
(74) Representative: Galgut, John
(86) International application number: PCT/AU2001/000827
(87) International publication number: WO 2002/097927

(56) References cited:
- DE-U- 29 702 211
- FR-A- 2 776 134
- GB-A- 2 231 208
- GB-A- 2 318 926
- GB-A- 2 324 015
- US-A- 3 735 329
- US-A- 4 681 385
- US-A- 5 685 744
- US-A- 5 989 070
- US-A- 6 178 290
- US-A- 6 192 787

## Description

This invention relates to power supply units for use with domestic appliances.

This invention is specifically concerned with such units which utilise cordless connectors of the kind disclosed in inter alia GB-2 318 926, GB-2 297 438, EPO 719 464, WO 01/47399 and US 5 971 810. The manner in which such connectors are used is also described in inter alia WO 01/52704 and DE 297 02 211.

In all these documents there is described a power supply unit comprising a main or base member connectable to a source of electrical power and cordless connector mounted on the base member, the base member serving a distribution member conveying power to the cordless connector. The appliance is in use placed on the base member to engage the cordless connector. The base member is larger than the appliances and in practice the base member will remain on a kitchen work surface and will take up considerable room on this surface. This is a disadvantage where space is a prime concern.

In DE 297 02 211 a large base member is described have three cordless connectors. Furthermore there is disclosed an arrangement having a plurality of cordless containers on the working surface which limits the use of the work surface (or other kitchen operations). In attempt to provide space on the working surface the base is pivoted to a wall to move into a vertical storage position, This has the disadvantage that either all the connectors are available or none are. Furthermore the working position of the cordless connectors is fixed.

According to the present invention such a power supply device for domestic appliances comprising a distribution member connectable to a source of electrical power and a cordless connector electrically connected fo the distribution member is characterised in that the cordless connector is mounted on an extension arm that is movably connected to the distribution member to move between a retracted position adjacent the distribution member and an operative position in which it is available for connection to a domestic appliance. This means that the cordless connector can be moved to minimise the amount of space taken up on the work surface when the appliance is not used. There is preferably a cavity in the distribution member to receive the connector when the extension arm is in the retracted position.

The extension arm may be pivoted to the distribution member about a vertical or horizontal axis. In another arrangement the extension arm may be slidably connected to the distribution member.

In a specific embodiment of the invention wherein the distribution member has an upper surface on which the appliance may be mounted and a connector is provided on the upper surface adapted to be connected to the receptor of an appliance. Thus the distribution member serves also as a base member.

There are preferably a plurality of extension arms provided so that a plurality of appliances can be provided with power from the power supply unit and in the retracted position the interference with the work surface is minimised.

According to another aspect of the invention there is provided the combination of the device as set out above placed on a worksurface with an appliance wherein the appliance is connected to the connector and stands on a work surface.

When removable from the free standing appliance, the electrical connectors may be removed from the free standing appliance and placed anywhere around the free standing appliance. The removable connectors may clip, retract or plug into the free standing appliance.

### BRIEF DESCRIPTION OF THE DRAWINGS

Figure 1 is a perspective view of the invention (first aspect);
Figure 2 is a top view of the invention (first aspect);
Figure 3 is a perspective view of the invention (second aspect);
Figure 4 is a top view of the invention (second aspect);
Figure 5 is a perspective view of the invention (third aspect indicating the slide concept);
Figure 6 is a perspective view of the invention (fourth aspect, indicating the vertical hinge concept);
Figure 7 is a perspective view of the invention (fifth aspect, indicating the pivot concept);
Figure 8 is a perspective view of an example useful for understanding the invention;
Figure 9 is a perspective view of the invention (sixth aspect).

### DESCRIPTION OF EMBODIMENTS

The modular appliance system illustrated in Figure I comprises a generally planar base unit 10 which is moulded from a suitably tough and heat resistant plastics material such as polypropylene, and a set of modular appliances 12, 14 and 16 which can be mounted on the base unit individually or together, on the base unit 10 and extension arms 1 and electrical connectors 2. The base unit 10 can be formed from other suitable plastics or other materials including metals such as stainless steel or natural materials such as marble or wood.

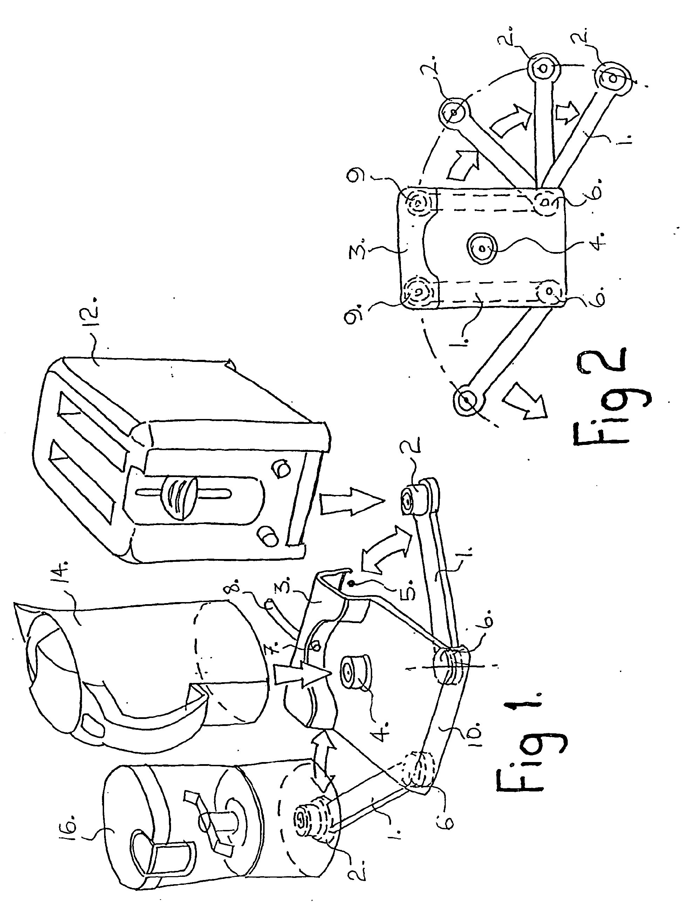

In Figure 1, the appliance 14 is a cordless kettle, the appliance 12 is a toaster and the appliance 16 is a chopper. It will be appreciated that the illustrated appliances are merely exemplary, and that the set of appliances usable on the base unit 10 may include various other appliances, or more than one identical appliance.

The base unit 10 may be rectangular and is provided with a locating formation in the form of an upstanding housing / locating step 3. The base unit 10 has a central upstanding cordless connector 4 of a kind known as such which mates with a complemental connector on the underside of the appliances 12, 14 and 16. The base unit 10 comprises extension arms I and upstanding cordless connectors 2 which are hingedly attached via hinge 6 to the base unit 10 so that the upstanding cordless connectors 2 may move out of the upstanding housing / locating step 3 on the extension arms 1 in an arc from the underside 5 of the base unit 10 into a position away from the base unit 10 so that appliances 12, 14 and 16 may be located with its complemental connector to the upstanding connectors 2. On base unit 10. on the upstanding housing / locating step 3 there is provided a safety cut out 7 and an electric cable 8 which provides electric current to the base unit 10, extension arms 1 and ultimately the cordless connectors 4 and 2. It will be seen that the base unit constitutes a distribution member to supply power to the connectors 4 and 2.

Figure 2 is a top view of the invention (first aspect) indicating the extension arms 1, cordless connectors 2 being rotated in an arc to positions outside of the base unit 10 by means of the hinge 6. Figure 2 also indicates the extension arms 1 and cordless connectors 2 in the closed position 9 usually when the appliances 12,14 and 16 (Figure 1) are not being used.

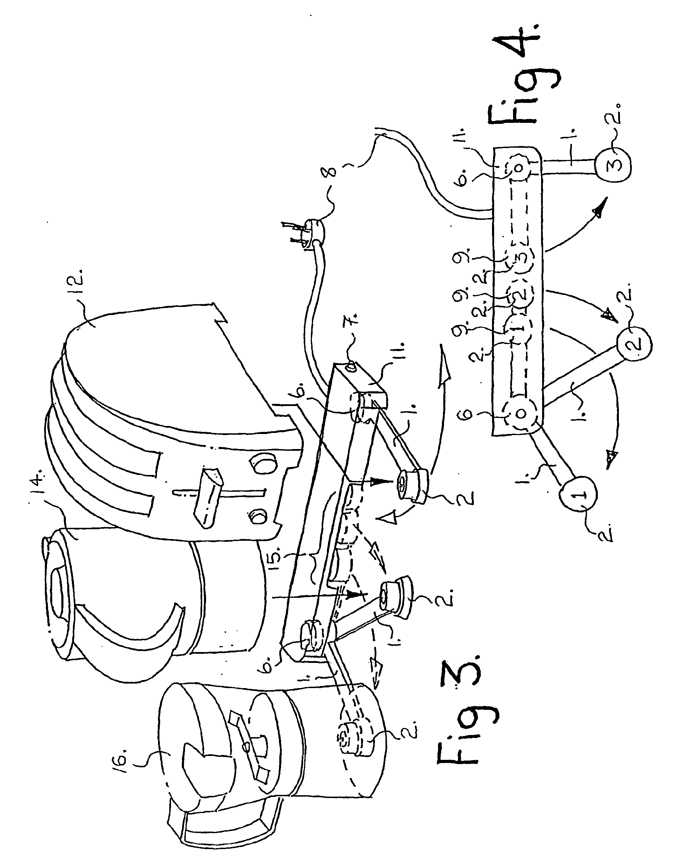

The modular appliance system illustrated in Figure 3 comprises a generally planar free standing unit 11 which constitutes a distribution member and which is moulded from a suitably tough and heat resistant plastics material such as polypropylene, and a set of modular appliances 12,14 and 16 which can be mounted onto the upstanding cordless controls 2 which are hingedly attached via extension arms I and hinges 6 to the free standing unit 11, either independently or simultaneously. The free standing unit 11 can be formed from other suitable plastics or other materials including metals such as stainless steel or natural materials such as marble or wood.

In Figure 3, the appliance 14 is a cordless kettle, the appliance 12 is a toaster and the appliance 16 is a chopper. It will be appreciated that the illustrated appliances are merely exemplary, and that the set of appliances usable on the free standing unit 11 may include various other appliances, or more than one identical appliance.

The free standing unit 11 may be rectangular and is provided with a cavity and opening 15 which houses the extension arms 1. upstanding cordless connectors 2 and hinges 6. The free standing unit 11 may comprise of one, two or more hingedly attached extension arms 1 and upstanding cordless connectors 2. The upstanding cordless connectors 2 are of a kind known as such which mates with a complemental connector on the underside of the appliances 12,14 and 16. The free standing unit 11 comprises extension arms 1 and upstanding cordless connectors 2 which are hingedly attached via hinge 6 to the free standing unit 11 so that the upstanding cordless connectors 2 may move out of the cavity and opening 15 on the extension arms 1 in an arc from the underside of the free standing unit 11 into a position away from the free standing unit 11 so that appliances 12, 14 and 16 may be located with its complemental connector to the upstanding connectors 2. On the free standing unit 11, there is provided a safety cut out 7 and an electric cable 8 which provides electric current to the free standing unit 11, extension arms 1 and ultimately the cordless connectors 2.

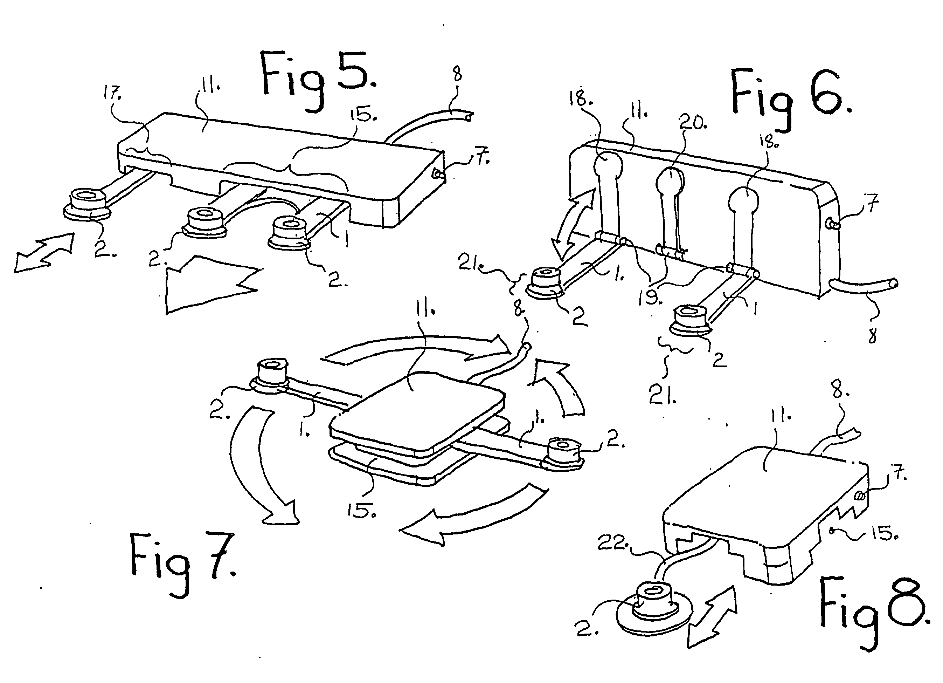

Figure 4 is a top view of the unit 11 (second aspect) indicating the extension arms 1, cordless connectors 2 being rotated in an arc to positions outside of the free standing unit 11 by means of the hinge 6. Figure 4 also indicates the extension arms 1 and upstanding cordless connectors 2 in the closed position 9 usually when the appliances 12, 14 and 16 (Figure 3) are not being used.

Figure 5 is perspective view of the unit 11 (third aspect) indicating the extension arms I and upstanding cordless connectors 2 being slid out of the cavity and opening 15 and 17 making the upstanding cordless connectors 2 accessible.

Figure 6 is a perspective view of the unit 11 (fourth aspect) indicating the extension aims 1 and upstanding cordless connectors 2 being hinged by means of hinges 19 from a closed position 20 about a horizontal axis in a vertical direction to an open position 21 in a horizontal direction making the upstanding cordless connectors 2 accessible.

Figure 7 is perspective view of the unit 11 (fifth aspect) indicating the extension arms 1 and upstanding cordless connectors 2 being rotated out of the cavity and opening 15 making the upstanding cordless connectors 2 accessible.

Figure 8 is perspective view of an example useful for understanding the invention indicating the cable 22 and upstanding cordless connectors 2 being removed from the cavity and opening 15 making the upstanding cordless connectors 2 accessible.

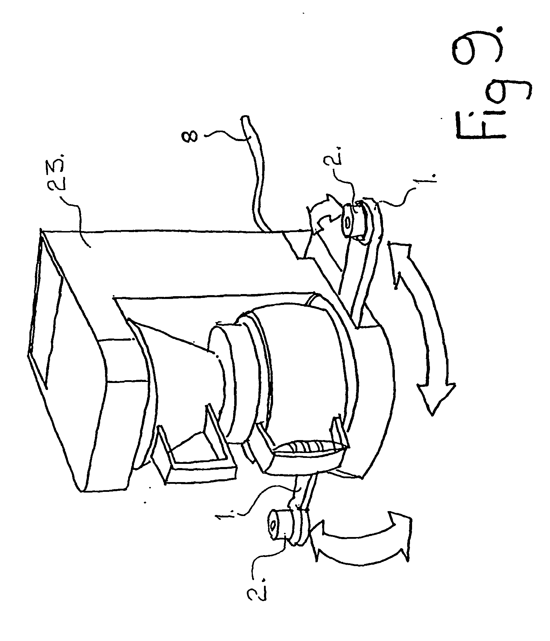

Figure 9 is a perspective view of a free standing appliance 23 being a coffee maker indicating the extension arms 1, cordless connectors 2 being rotated in an are to positions outside of the free standing appliance 23,

It will be appreciated that the exact shape and configuration of the inventions described above, the connectors used and other elements and configurations and locations of connectors on the base unit, free standing unit and free standing appliance is purely exemplary and that numerous variations are possible without departing from the scope of the invention as defined in the claims.

## Claims

1. A power supply device for domestic appliances comprising a distribution member (11) connectable to a source of electrical power and a cordless connector (2) electrically connected to the distribution member **characterised in that** the cordless connector is mounted on an arm (1) that is movably connected to the distribution member to move between a retracted position adjacent the distribution member and an operative position in which it is available for connection to a domestic appliance.

2. A device as claimed in claim 1 **characterised in that** the distribution member is provided with a cavity (15) into which the connector is received when in the retracted position.

3. A device as claimed in claim 1 or claim 2 **characterised in that** the arm is pivotally connected to the distribution member.

4. A device as claimed in any one of the preceding claims **characterised in that** the arm is pivotally connected to the distribution member to pivot about a vertical pivot axis.

5. A device as claimed in claim 4 **characterised in that** the arm is pivotally connected to the distribution member to pivot about a horizontal pivot axis.

6. A device as claimed in any one of the preceding claims wherein the distribution member has an upper surface on which an appliance (12, 14, 16) may be mounted and in that a connector (4) is provided on the upper surface adapted to be connected to the receptor of an appliance.

7. A device as claimed in claim 1 or claim 2 **characterised in that** the arms are slidably movable relative to the distribution member

8. A device as claimed in any one of the preceding claims **characterised by** a plurality of arms each having a connector at its free end.

9. The combination of a device as claimed in any one of the preceding claims placed on a worksurface with an appliance **characterised in that** the appliance is connected to the connector and stands on a work surface.

## Patentansprüche

1. Eine Energieversorgungseinrichtung für Haushaltsanwendungen, die ein Verteilungselement (11) das an eine elektrische Stromquelle anschließbar ist, und einen kabellosen Verbinder (2) umfasst, der elektrisch an das Verteilungselement angeschlossen ist, **dadurch gekennzeichnet, dass** der kabellose Verbinder an einem Arm (1) angebracht ist, der bewegbar an dem Verteilungselement angebracht ist, um zwischen einer zurückgezogenen Position benachbart zu dem Verteilungselement und einer Betriebsposition, in welcher er zum Verbinden an einer häusliche Anwendung zur Verfügung steht, bewegt zu werden.

2. Eine Vorrichtung wie in Anspruch 1 beansprucht, **dadurch gekennzeichnet, dass** das Verteilungselement mit einer Aushöhlung (Hohlraum) (15) versehen ist, in welchen der Verbinder zurückgezogen ist, wenn er in der zurückgezogenen Position befindlich ist.

3. Eine Vorrichtung wie in Anspruch 1 oder 2 beansprucht, **dadurch gekennzeichnet, dass** der Arm drehbar an dem Verteilungselement angebracht ist.

4. Eine Vorrichtung wie in einem der vorhergehenden Ansprüche beansprucht, **dadurch gekennzeichnet, dass** der Arm drehbar an dem Verteilungselement zum Drehen um eine vertikale Drehachse angebracht ist.

5. Eine Vorrichtung wie in Anspruch 4 beansprucht, **dadurch gekennzeichnet, dass** der Arm drehbar an dem Verteilungselement zum Drehen um eine horizontale Drehachse angebracht ist.

6. Eine Vorrichtung wie in einem der vorhergehenden Ansprüche beansprucht, wobei das Verteilungselement eine obere Oberfläche aufweist, auf welcher ein Gerät (12, 14, 16) angebracht werden kann und wobei ein Verbinder (4) mit einer oberen Oberfläche vorgesehen ist, die zum Anbringen an dem Aufnehmer des Geräts ausgebildet ist.

7. Eine Vorrichtung wie in einem der Ansprüche 1 oder 2 beansprucht, **dadurch gekennzeichnet, dass** die Arme schiebbar relativ zu dem Verteilungselement beweglich sind.

8. Eine Vorrichtung wie in einem der vorhergehenden Ansprüche beansprucht, **dadurch gekennzeichnet, dass** eine Vielzahl von Armen jeweils einen Verbinder an ihrem freien Ende aufweisen.

9. Die Kombination einer Vorrichtung wie in einem der vorhergehenden Ansprüche beansprucht, wobei sie auf einer Arbeitsoberfläche mit einem Gerät angeordnet ist, **dadurch gekennzeichnet, dass** das Gerät mit dem Verbinder verbunden ist und auf einer Arbeitsoberfläche steht.

## Revendications

1. Dispositif d'alimentation électrique pour appareils ménagers comprenant un élément de distribution (11) pouvant être raccordé à une source d'énergie électrique et un connecteur sans fil (2) raccordé électriquement à l'élément de distribution, **caractérisé en ce que** le connecteur sans fil est monté sur un bras (1) qui est raccordé de manière amovible à l'élément de distribution pour se déplacer entre une position rétractée adjacente à l'élément de distribution et une position de fonctionnement dans laquelle il peut être raccordé à un appareil ménager.

2. Dispositif selon la revendication 1 **caractérisé en ce que** l'élément de distribution est pourvu d'une cavité (15) dans laquelle le connecteur est reçu lorsqu'il se trouve dans la position rétractée.

3. Dispositif selon la revendication 1 ou la revendication 2 **caractérisé en ce que** le bras est raccordé sur pivot à l'élément de distribution.

4. Dispositif selon l'une quelconque des revendications précédentes **caractérisé en ce que** le bras est raccordé sur pivot à l'élément de distribution pour pivoter sur un axe de pivot vertical.

5. Dispositif selon la revendication 4 **caractérisé en ce que** le bras est raccordé sur pivot à l'élément de distribution pour pivoter sur un axe de pivot horizontal.

6. Dispositif selon l'une quelconque des revendications précédentes dans lequel l'élément de distribution comprend une surface supérieure sur laquelle un appareil. (12; 14, 16) peut être monté et **caractérisé en ce qu'**un connecteur (4) est prévu sur la surface supérieure adapté pour être raccordé au récepteur d'un appareil.

7. Dispositif selon la revendication 1 ou la revendication 2 **caractérisé en ce que** les bras peuvent être déplacés de manière coulissante par rapport à l'élément de distribution.

8. Dispositif selon l'une quelconque des revendications précédentes **caractérisé par** une pluralité de bras, chacun comprenant un connecteur au niveau de son extrémité libre.

9. Combinaison d'un dispositif selon l'une quelconque des revendications précédentes placée sur une surface de travail avec un appareil, **caractérisée en ce que** l'appareil est raccordé au connecteur et se trouve sur une surface de travail.
